(19) Europäisches Patentamt
European Patent Office
Office européen des brevets

(11) **EP 1 347 273 A1**

(12) **EUROPÄISCHE PATENTANMELDUNG**

(43) Veröffentlichungstag:
**24.09.2003  Patentblatt 2003/39**

(51) Int Cl.⁷: **G01G 3/14**, G01L 1/22

(21) Anmeldenummer: **03004772.4**

(22) Anmeldetag: **05.03.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **23.03.2002  DE 10213078**
**02.07.2002  DE 10229739**

(71) Anmelder: **Soehnle-Waagen GmbH & Co. KG**
**71540 Murrhardt (DE)**

(72) Erfinder: **Schurr, Michael**
**71540 Murrhardt (DE)**

(54) **Wägezelle**

(57)   Wägezelle bestehend aus einem Biegebalken der Widerstandsmessstreifen trägt, wobei die Widerstandsmessstreifen in Blöcken angeordnet, die zueinander im Winkel von 90° stehen und symmetrisch zur Längsachse des Biegebalkens verlaufen.

Fig.2

EP 1 347 273 A1

## Beschreibung

Die Erfindung betrifft eine Wägezelle gemäß dem Oberbegriff des Anspruchs 1.

Derartige Wägezellen werden sowohl für Haushalts- als auch Industriewaagen eingesetzt. Sie finden insbesondere da Einsatz, wo eine hohe Genauigkeit bei unterschiedlichsten Einsatz- und Umgebungsbedingungen erzielt werden sollen.

Dabei ist es bekannt, Biegebalken mit mehreren Widerstandsmessstreifen, so genannten DMS-Applikationen zu versehen. Dabei kommen lokal verteilte beidseitige DMS-Verklebungen zum Einsatz, die aber eine aufwendige Verschaltung wegen der großen Abstände zwischen den DMS erforderlich machen und die zusätzlich recht anfällig für Temperaturgradienten sind.

Es ist auch bekannt, auf einem Biegebalken einseitig mehrere DMS anzubringen, wodurch der Verschaltungsaufwand geringer wird, allerdings mit dem Nachteil, dass die Empfindlichkeit auf Temperaturgradienten noch größer wird. Dies führt zu Nullsignaländerungen, die erst dann wieder ausgeglichen werden, wenn sich das Temperaturniveau eingependelt hat.

Schließlich wurde durch die EP 0 244 324 B1 ein Kraftwandler mit Widerstandsmessstreifen bekannt, die senkrecht zueinander auf Biegebalken angeordnet sind. Nachteilig an dieser Anordnung ist, und dies führt zwangsläufig zu Ungenauigkeiten, dass mit dieser Konstellation auch Torsionsspannungen gemessen werden.

Aufgabe der Erfindung ist es, eine Wägezelle, basierend auf einem Biegebalken mit Widerstandsmessstreifen zu schaffen, die sowohl gegen Torsionsspannungen als auch gegen starke Temperaturänderungen unempfindlich ist, und die dennoch einfach zu fertigen ist, d.h. mit einem geringen Verdrahtungsaufwand bei gleichem Materialeinsatz zu realisieren ist.

Diese Aufgabe wird erfindungsgemäß durch die kennzeichnenden Merkmale des Anspruchs 1 gelöst. Durch die symmetrische Anordnung der Messstreifen werden Torsionsspannungen eliminiert. Die gewählte DMS-Anordnung ist gegenüber Temperaturgradienten unempfindlich, so dass die Messergebnisse bei den denkbaren Einsatzbedingungen absolut konstant bleiben. Der Verschaltungsaufwand ist relativ gering, die Fertigung durch die einseitige DMS-Verklebung einfach.

Allerdings hat die Querkontraktionsmessung zur Folge, dass die Wägezelle bei gleicher Dimensionierung wie eine Wägezelle nach dem Stand der Technik ein geringeres Ausgangssignal liefert. Dies ist allerdings nur von geringer Bedeutung und könnte, falls für spezielle Einsatzbedingungen gefordert, durch Umdimensionierung der Biegestellen und/oder Verwendung eines Federwerkstoffes mit entsprechend höherer Dehngrenze ohne weiteres eliminiert werden.

Weitere Ausgestaltungen der Erfindung sind den Unteransprüchen zu entnehmen.

So bietet es sich an, als Biegebalken einen sogenannten Doppelbiegebalken einzusetzen, um bei der Gestaltung der Waage einen größeren Spielraum zu haben.

Es ist auch möglich, je nach Anforderung, die Querkontraktionsmessung auf die Symmetrieachse der Wägezelle zu verlegen und die Messung der Normalspannung über beidseitig angeordnete Messstreifen durchzuführen.

Zwei Ausführungen der Erfindung werden im Folgenden anhand der Zeichnungen näher erläutert.

Es zeigen:

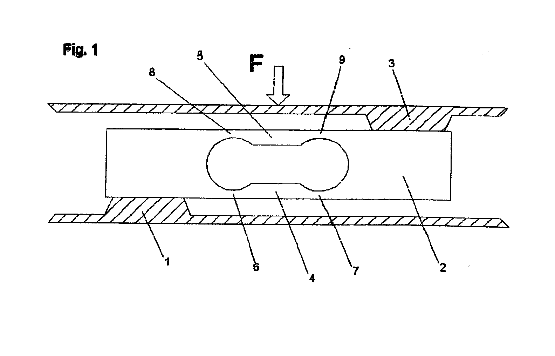

Fig. 1 einen Schnitt durch den Bereich Wägezelle einer Plattformwaage,

Fig. 2 eine Wägezelle mit zwei Messstreifen zur Messung der Normalspannungen und vier Messstreifen zur Messung der Querkontraktion,

Fig. 3 eine Wägezelle mit zwei Messstreifen zur Messung der Querkontraktion und vier Messstreifen zur Messung der Normalspannungen und

Fig.4 Wheatstone schen Brücke gemäß der Erfindung

Zwischen einer Grundplatte 1 und einer Lastplatte 3 einer Plattformwaage ist eine Wägezelle 2 angeordnet. Eine Gewichtskraft F kann auf der Lastplatte 3 an beliebiger Stelle aufgebracht werden.

Die Wägezelle 2 ist als sogenannter Doppelbiegebalken ausgebildet und hat einen unteren Lenker 4 und einen oberen Lenker 5. Der untere Lenker 4 wird durch die Biegestellen 6 und 7, der obere Lenker 5 durch die Biegestellen 8 und 9 gebildet. Bei der Belastung der Lastplatte 3 durch die Gewichtskraft F treten an den Biegestellen 6, 7, 8, 9 Biegespannungen auf. Dabei handelt es sich bei den graden Außenflächen der Biegestellen 7 und 8 um Zugspannungen und bei den graden Außenflächen der Biegestellen 6 und 9 um Druckspannungen.

An den Biegestellen werden Messstreifen appliziert und zu einer Wheatstone schen Brücke verschaltet.

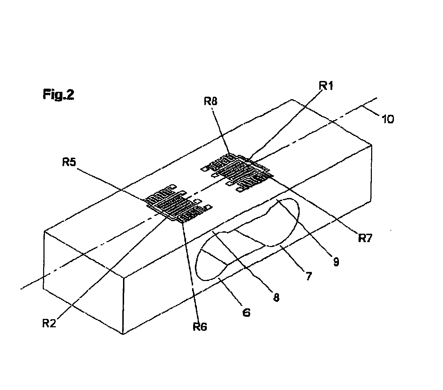

In Fig. 2 ist eine Wägezelle 2 perspektivisch, stark vereinfacht dargestellt. Die Wägezelle ist als Doppel- oder Mehrfachbiegebalken mit einseitiger Messstreifen (DMS)-Applikation ausgeführt. Natürlich könnte auch ein einfacher Biegebalken zum Einsatz kommen.

An jeder der beiden Biegestellen 8 und 9 sind zusätzlich zu den Messstreifen R1 und R2 zur Messung von Zug- und Druckspannungen jeweils beidseitig Messstreifen R5 und R6 und beidseitig vom Messstreifen R1 Messstreifen R7 und R8 zur Messung der Querkontraktion angebracht.

Die Messstreifen zur Querkontraktionsmessung R5, R6, R7, R8 sind unter einem Winkel von 90° zu den Messstreifen R1 und R2 angeordnet. Der Wert der Querkontraktion liegt bei Metallen bei etwa 30% der Normaldehnung.

An jeder der beiden Biegestellen werden also sowohl Zug- als auch Druckspannungen gemessen. Um Torsionsspannungen auszuschließen, werden die Messstreifen R1 und R2 zur Normalspannungsmessung auf der Längsachse 10 der Wägezelle 2 symmetrisch platziert.

Die Querkontraktionsmessung erfolgt über je zwei Messstreifen R5 und R6 beziehungsweise R7 und R8; diese Messstreifen sind ebenfalls symmetrisch zur Längsachse 10 angeordnet.

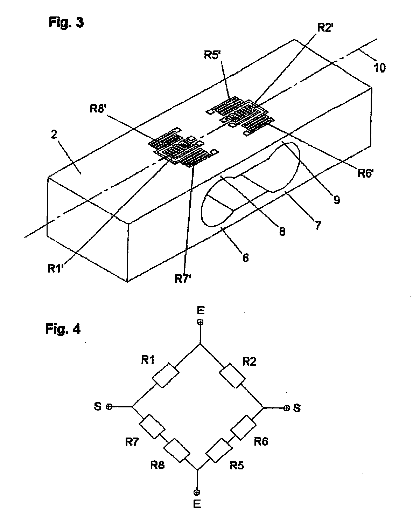

In dem zweiten Ausführungsbeispiel gemäß Fig. 3 sind die Messstreifen zur Querkontraktionsmessung R1' und R2' auf der Längsachse 10 der Wägezelle 2 symmetrisch platziert. Die Messung der Normalspannung erfolgt über je zwei Messstreifen R5' und R6' beziehungsweise R7' und R8', die ebenfalls symmetrisch zur Längsachse 10 angeordnet sind.

Die Verschaltung erfolgt gemäß Fig. 4. Die Messstreifen an einer Biegestelle bilden dabei eine sogenannte Halbbrücke. Dabei ist mit E die Einspeisung und mit S das Signal gekennzeichnet.

Erwärmt sich beispielsweise gemäß Fig. 2 die Biegestelle 9 gegenüber der Biegestelle 8, so ändern die Messstreifen R1, R7 und R8 ihren Widerstand um ΔR1, ΔR7 und ΔR8.

Es gilt somit

$$R1 = R7 + R8$$

$$\Delta R1 = \Delta R7 + \Delta R8$$

Die Wheatstone'sche Brücke hat die Eigenschaft, dass sich gleichgerichtete Widerstandsänderungen, in diesem Fall ΔR1 und (ΔR7 + ΔR8) in benachbarten Brückenzweigen aufheben. Es treten deshalb auch bei starken Temperaturgradienten nur minimale Nullsignaländerungen auf. Dadurch sind die erfindungsgemäßen Wägezellen wegen ihrer hohen Temperaturkonstanz universell einsetzbar.

**Patentansprüche**

1. Wägezelle bestehend aus einem Biegebalken der Widerstandsmessstreifen trägt, die in Blöcken angeordnet sind, verschiedene Paritäten aufweisen und im jeweiligen Block senkrecht zueinander stehen, **dadurch gekennzeichnet, dass** die Blöcke der Widerstandsmessstreifen (R1 - R8) symmetrisch zur Längsachse (10) des Biegebalkens (2) angeordnet sind.

2. Wägezelle nach Anspruch 1, **dadurch gekennzeichnet, dass** die Messstreifen zur Messung der Zug- und Druckspannungen R1 und R2 mittig auf der Längsachse (10) und die Messstreifen zur Messung der Querkontraktion R5, R6, R7, R8 jeweils beidseitig von diesen angeordnet sind.

3. Wägezelle nach Anspruch 1, **dadurch gekennzeichnet, dass** die Messstreifen zur Querkontraktionsmessung R1' und R2' auf der Längsachse (Symmetrieachse) angeordnet und die Messstreifen zur Messung der Zug- und Druckspannungen (Normalspannungen) R5' und R6' beziehungsweise R7' und R8' beidseitig ebenfalls symmetrisch zur Längsachse angeordnet sind.

4. Wägezelle nach einem der Ansprüche 1 bis 3, **dadurch gekennzeichnet, dass** Biegebalken als Doppelbiegebalken (3) ausgebildet ist.

Fig. 1

**Fig.2**

**Fig. 3**

**Fig. 4**

**Europäisches Patentamt**

# EUROPÄISCHER RECHERCHENBERICHT

Nummer der Anmeldung

EP 03 00 4772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 339 191 A (HOTTINGER MESSTECHNIK BALDWIN) 2. November 1989 (1989-11-02) * Spalte 5, Zeile 2 - Zeile 46 * * Abbildung 3 * --- | 1-4 | G01G3/14 G01L1/22 |
| Y | US 4 267 724 A (SPOOR MARTIN) 19. Mai 1981 (1981-05-19) * Spalte 1, Zeile 19 - Zeile 30 * * Spalte 3, Zeile 13 - Zeile 51 * * Abbildungen 1-3 * --- | 1-4 | |
| A | US 4 869 113 A (SARRAZIN MICHEL) 26. September 1989 (1989-09-26) * Spalte 4, Zeile 42 - Spalte 6, Zeile 53 * * Abbildungen 1-4 * ----- | 1-4 | |

| | RECHERCHIERTE SACHGEBIETE (Int.Cl.7) |
|---|---|
| | G01B G01G G01L |

Der vorliegende Recherchenbericht wurde für alle Patentansprüche erstellt

| Recherchenort | Abschlußdatum der Recherche | Prüfer |
|---|---|---|
| MÜNCHEN | 28. April 2003 | Grand, J-Y |

**ANHANG ZUM EUROPÄISCHEN RECHERCHENBERICHT
ÜBER DIE EUROPÄISCHE PATENTANMELDUNG NR.**

EP 03 00 4772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0339191 | A | 02-11-1989 | DE | 3810456 A1 | 05-10-1989 |
| | | | DE | 58906724 D1 | 03-03-1994 |
| | | | EP | 0339191 A2 | 02-11-1989 |
| | | | JP | 1311202 A | 15-12-1989 |
| US 4267724 | A | 19-05-1981 | CA | 1115548 A1 | 05-01-1982 |
| | | | DE | 2951323 A1 | 17-07-1980 |
| | | | FR | 2445957 A1 | 01-08-1980 |
| | | | GB | 2039675 A ,B | 13-08-1980 |
| | | | JP | 55094102 A | 17-07-1980 |
| US 4869113 | A | 26-09-1989 | FR | 2623623 A1 | 26-05-1989 |
| | | | AT | 70633 T | 15-01-1992 |
| | | | BR | 8806053 A | 08-08-1989 |
| | | | CA | 1321480 A1 | 24-08-1993 |
| | | | DE | 3867041 D1 | 30-01-1992 |
| | | | DE | 317429 T1 | 28-12-1989 |
| | | | EP | 0317429 A1 | 24-05-1989 |
| | | | ES | 2010991 T3 | 01-07-1992 |
| | | | JP | 1162124 A | 26-06-1989 |
| | | | JP | 2597688 B2 | 09-04-1997 |
| | | | KR | 9206453 B1 | 06-08-1992 |

EPO FORM P0461

Für nähere Einzelheiten zu diesem Anhang : siehe Amtsblatt des Europäischen Patentamts, Nr.12/82